# EUROPEAN PATENT SPECIFICATION

(11) **EP 3 150 326 B1**
(45) Date of publication and mention of the grant of the patent: **05.06.2019**
(21) Application number: 16188508.2
(22) Date of filing: 13.09.2016
(51) Int. Cl.: B23K 35/36, B23K 35/02, B23K 35/26

(54) **SOLDER COMPOSITION AND ELECTRONIC SUBSTRATE**
LOTZUSAMMENSETZUNG UND ELEKTRONISCHES SUBSTRAT
COMPOSITION DE BRASAGE ET SUBSTRAT ÉLECTRONIQUE

(30) Priority: 30.09.2015 JP 2015194590
(43) Date of publication of application: 05.04.2017
(73) Proprietor: Tamura Corporation, Tokyo 178-8511 (JP)
(72) Inventor: YOSHIZAWA, Shinji, Iruma-shi Saitama 358-8501 (JP); OKUMURA, Satoshi, Iruma-shi Saitama 358-8501 (JP)
(74) Representative: Grünecker Patent- und Rechtsanwälte PartG mbB

(56) References cited:
- EP-A1- 1 402 990
- EP-A1- 2 716 404
- EP-A2- 1 317 991
- WO-A1-2008/000349
- JP-B2- 5 782 474
- US-A1- 2004 000 355

## Description

### TECHNICAL FIELD

The present invention relates to a solder composition and an electronic substrate.

### BACKGROUND ART

A solder composition is a mixture in paste form obtained by kneading a solder powder and a flux composition (i.e., composition including a rosin-based resin, an activator, a solvent and the like). The solder composition is required to exhibit solderability, in which the solder has melting property and a property of easily being wet and spread (i.e., solder wet-spreadability). In order to meet to such requirements, an activator to be contained in the flux composition has been studied (see, for instance, Patent Literature 1: JP-A-2013-169557).

Meanwhile, a mobile terminal such as a smartphone has been downsized and multi-functionalized. An electronic component for use in such a mobile terminal also has been miniaturized, and junction of a land having a small area of such an electronic component with a small amount of the solder composition is required. Further, metal such as albata is used for a shield case of the smartphone, and junction of such metal with the solder composition is also required.

However, as the activator to be contained in the flux composition, an activator particularly advantageous for solderability for albata has not been found yet. Further, for the junction of the land having a small area of the electronic component with a small amount of the solder composition, it becomes necessary to, for example, increase an amount of the activator such as aliphatic carboxylic acid. However, in such a case, the activator remains in a residue after a reflow process, which may cause decrease in reliability due to occurrence of metal corrosion and migration. Furthermore, when an amount of aliphatic carboxylic acid is increased, wettability to metal such as albata is significantly decreased. As described above, it has been difficult to enhance both of the melting property in a small area and the solderability for albata.

JP-5-782474 B2 relates to a solder composition used in electronic applications, comprising a solder powder of Sn-Cu-Ag and a flux comprising a rosin-based resin, a solvent and from 0.5 to 20 mass% of an activator.

EP 1317991 A2 discloses a lead-free solder paste comprising an Sn-Zn-based lead-free solder powder mixed with a flux, wherein the flux contains at least one aromatic hydrocarboxylic acid selected from the group consisting of aromatic carboxylic acids having one hydroxyl group in a meta position and aromatic carboxylic acids having at least two hydroxyl groups in an amount of 0.1 to 10 mass%.

US 2004/000355 A1 discloses a residue-free solder paste for use in reflow soldering comprising a solder powder mixed with a pasty flux, the flux comprising at least one solid solvent, which is solid at room temperature and which vaporizes at a reflow soldering temperature, at least one highly viscous solvent, which is a highly viscous fluid at room temperature and which vaporizes at the reflow soldering temperature, and at least one liquid solvent which is liquid at room temperature and which vaporizes at the reflow soldering temperature.

### SUMMARY OF THE INVENTION

In view of the above, an object of the invention is to provide a solder composition that is excellent in a melting property in a small area and solderability for albata, and an electronic substrate using the solder composition.

To solve the above problem, the present invention provides a solder composition and an electronic substrate described hereinbelow.

A solder composition of the invention comprises:
5 mass% to 35 mass% of a flux composition; and
65 mass% to 95 mass% of a component (D) in a form of a solder powder,
the flux composition comprising, based on the total mass of the flux composition:
30 mass% to 70 mass% of a component (A) in a form of a rosin-based resin;
1 mass% to 30 mass% of a component (B) in a form of an activator; and
20 mass% to 50 mass% of a component (C) in a form of a solvent;
   wherein
   the component (B) in a form of the activator comprises, based on the total mass of the flux composition:
   0.1 mass% to 10 mass% of a component (B1) in a form of an aromatic carboxylic acid having a hydroxyl group or an acyl group at an ortho position or a pros position;
   0.1 mass% to 12 mass% of a component (B2) in a form of a polymerized aliphatic acid;
   0.1 to 10 mass% of a component (B3) in a form of an aliphatic dicarboxylic acid, and
   0.1 to 10 mass% of a component (B5) in a form of a nondissociative activator formed of a nondissociative halogenated compound, and
   the component (B1) is at least one of aromatic carboxylic acids selected from the group consisting of 2-hydroxybenzoic acid, 2-hydroxy-6-methylbenzoic acid, 2,4-dihydroxybenzoic acid, 2,4-dihydroxy-6-methylbenzoic acid, 1-hydroxy-2-naphthoic acid, 3-hydroxy-2-naphthoic acid, 1,4-dihydroxy-2-naphthoic acid, 2-benzoyl benzoic acid, 2-(4'-methylbenzoyl) benzoic acid, 2-acetyl benzoic acid, 1-benzoyl-2-naphthoic acid and 3-benzoyl-2-naphthoic acid.

In the above arrangement, at least one of targets to which the solder composition is joined may be albata.

An electronic substrate of the invention includes an electronic component attached thereon using the solder composition.

Preferred embodiments are set forth in the subclaims.

According to the above aspect of the invention, it is possible to provide a solder composition that is excellent in a melting property in a small area and solderability for albata, and an electronic substrate using the solder composition.

### DESCRIPTION OF EMBODIMENT(S)

A solder composition of an exemplary embodiment of the invention includes a flux composition and a component (D) in a form of a solder powder respectively described hereinbelow.

### Flux Composition

Initially, a flux composition for use in the exemplary embodiment will be described. The flux composition for use in the exemplary embodiment is a component other than a solder powder in a solder composition, and includes a component (A) in a form of a rosin-based resin, a component (B) in a form of an activator and a component (C) in a form of a solvent.

### Component (A)

Examples of the component (A) in a form of the rosin-based resin for use in the exemplary embodiment include rosins and rosin-based modified resins. Examples of the rosins include gum rosin, wood rosin, tall oil rosin, disproportionated rosin, polymerized rosin, hydrogenated rosin, and a derivative thereof. As for the rosin-based modified resin, it is possible to employ an unsaturated-organic-acid-modified resin of the rosins (e.g., modified resin obtained by modification using an aliphatic unsaturated monobasic acid such as (meth)acrylic acid, an aliphatic unsaturated dibasic acid such as α,β-unsaturated carboxylic acids including fumaric acid and maleic acid, and an aromatic-ring-containing unsaturated carboxylic acid such as cinnamic acid), an abietic-acid-modified resin of the rosins, or a substance containing, as its main component, the modified resin(s). The rosins can be a reaction component of Diels-Alder reaction. The rosin-based resin can be employed singly or in combination of two or more kinds thereof.

A content of the component (A) is in a range from 30 mass% to 70 mass%, and preferably in a range from 35 mass% to 60 mass% with respect to 100 mass% of the flux composition. When the content of the component (A) is less than the lower limit described above, a so-called solderability (prevention of oxidation of a copper foil surface on a soldering land such that melting solder easily gets wet on the copper foil surface) is decreased, and a solder ball is likely to be formed. In contrast, when the content of the component (A) exceeds the upper limit described above, an amount of the flux residue is likely to be increased.

### Component (B)

It is necessary for the component (B) in a form of the activator for use in the exemplary embodiment to include (B1) an aromatic carboxylic acid having a hydroxyl group or an acyl group at an ortho position or a pros position as described later.

Component (B1) is at least one of aromatic carboxylic acids selected from the group consisting of 2-hydroxybenzoic acid, 2-hydroxy-6-methylbenzoic acid, 2,4-dihydroxybenzoic acid, 2,4-dihydroxy-6-methylbenzoic acid, 1-hydroxy-2-naphthoic acid, 3-hydroxy-2-naphthoic acid, 1,4-dihydroxy-2-naphthoic acid, 2-benzoyl benzoic acid, 2-(4'-methylbenzoyl) benzoic acid, 2-acetyl benzoic acid, 1-benzoyl-2-naphthoic acid and 3-benzoyl-2-naphthoic acid.

The component (B1) can be employed singly or in combination of two or more kinds thereof.

A content of the component (B1) is in a range from 0.1 mass% to 10 mass%, preferably in a range from 0.5 mass% to 8 mass%, and particularly preferably in a range from 1 mass% to 5 mass% with respect to 100 mass% of the flux composition. When the content of the component (B1) is less than the lower limit described above, the melting property in a small area is likely to be decreased. In contrast, when the content of the component (B1) exceeds the upper limit described above, reliability is likely to be decreased due to occurrence of metal corrosion or migration.

The component (B) also includes (B2) a polymerized aliphatic acid and (B3) an aliphatic dicarboxylic acid as described later.

Examples of (B2) a polymerized aliphatic acid for use in the exemplary embodiment include fatty acid generated by polymerization of unsaturated fatty acid. The component (B2) tends to be able to prevent reoxidation of the solder powder, and therefore it is possible to increase the effect of other activators synergistically.

Although the carbon number of the unsaturated fatty acid is not particularly limited, the carbon number of the unsaturated fatty acid is preferably in a range from 8 to 22, more preferably in a range from 12 to 18, and particularly preferably 18. Further, although the polymerized aliphatic acid is not particularly limited, the polymerized aliphatic acid preferably includes dibasic acid or tribasic acid as its main component. Specifically, examples of the polymerized aliphatic acid include dimer acid (having the carbon number of 36) and trimer acid (having the carbon number of 54).

A content of the component (B2) is in a range from 0.1 mass% to 12 mass%, preferably in a range from 0.5 mass% to 10 mass% with respect to 100 mass% of the flux composition. When the content of the component (B2) is less than the lower limit described above, the solderability is likely to be decreased. In contrast, when the content of the component (B2) exceeds the upper limit described above, reliability is likely to be decreased due to occurrence of metal corrosion or migration.

(B3) an aliphatic dicarboxylic acid for use in the exemplary embodiment is dibasic acid having an alkylene group. Although the carbon number of the aliphatic dicarboxylic acid is not particularly limited, the carbon number of the aliphatic dicarboxylic acid is preferably in a range from 3 to 22, more preferably in a range from 5 to 20. Examples of the aliphatic dicarboxylic acid include malonic acid, succinic acid, glutaric acid, adipic acid, pimelic acid, suberic acid, azelaic acid, sebacic acid, dodecanedioic acid and eicosanedioic acid. The aliphatic dicarboxylic acid can be employed singly or in combination of two or more kinds thereof.

A content of the component (B3) is in a range from 0.1 mass% to 10 mass%, preferably in a range from 0.5 mass% to 8 mass%, and particularly preferably in a range from 0.5 mass% to 6 mass% with respect to 100 mass% of the flux composition. When the content of the component (B3) is less than the lower limit described above, the solderability is likely to be decreased. In contrast, when the content of the component (B3) exceeds the upper limit described above, the solderability for albata is likely to be decreased and reliability is likely to be decreased due to occurrence of metal corrosion or migration.

The component (B) may further include other organic acid (hereinafter referred to as component (B4)) other than the components (B1) to (B3) described above.

Examples of the component (B4) include monocarboxylic acid other than the component (B1) and other organic acid.

Examples of the monocarboxylic acid include formic acid, acetic acid, proprionic acid, butyric acid, valeric acid, caproic acid, enanthic acid, capric acid, lauryl acid, myristic acid, pentadecyl acid, palmitin acid, margaric acid, stearic acid, tuberculostearic acid, arachidic acid, behenic acid and lignoceric acid.

Examples of the other organic acid include glycolic acid, levulinic acid, lactic acid, acrylic acid, anisic acid, citric acid and picoline acid.

The component (B4) can be employed singly or in combination of two or more kinds thereof.

A content of the component (B4) is preferably in a range from 0.1 mass% to 8 mass%, more preferably in a range from 0.2 mass% to 5 mass% with respect to 100 mass% of the flux composition.

The component (B) further includes as (B5) a nondissociative activator formed of a nondissociative halogenated compound. The component (B5) can provide its activational effect almost without influencing an activational effect of each of the components (B1) to (B4) described above.

Examples of the component (B5) include a non-salt organic compound to which a halogen atom is bonded through a covalent bond. The halogenated compound may be a compound in which chlorine atom(s), bromine atom(s) or fluorine atom(s) is singly included through a covalent bond (e.g., a chloride, bromide and fluoride). Alternatively, the halogenated compound may be a compound in which any two or all of atoms selected from chlorine atom(s), bromine atom(s) and fluorine atom(s) are included through a covalent bond. It is preferable, in view of improvement in the solubility to an aqueous solvent, that the halogenated compound has a polar group such as hydroxyl group and carboxyl group as in the case of halogenated alcohol or halogenated carboxyl compound. Examples of the halogenated alcohol include: brominated alcohol such as 2,3-dibromopropanol, 2,3-dibromobutanediol, trans-2,3-dibromo-2-butene-1,4-diol, 1,4-dibromo-2-butanol and tribromoneopentylalcohol; chlorinated alcohol such as 1,3-dichloro-2-propanol and 1,4-dichloro-2-butanol; fluorinated alcohol such as 3-fluorocatechol; and other compounds equivalent to the above. Examples of the halogenated carboxyl compound include: a carboxyl iodide compound such as 2-iodobenzoic acid, 3-iodobenzoic acid, 2-iodopropionic acid, 5-iodosalicylic acid and 5-iodoanthranilic acid; carboxyl chloride compound such as 2-chlorobenzoic acid and 3-chloropropionic acid; a brominated carboxyl compound such as 2,3-dibromopropionic acid, 2,3-dibromosuccinic acid and 2-bromobenzoic acid; and other compounds equivalent to the above. The activator can be employed singly or in combination of two or more kinds thereof.

A content of the component (B5) is in a range from 0.1 mass% to 10 mass%, preferably in a range from 0.5 mass% to 5 mass%, and particularly preferably in a range from 1 mass% to 3 mass% with respect to 100 mass% of the flux composition. When the content of the component (B5) is less than the lower limit described above, the solder wet-spreadability is likely to be decreased. In contrast, when the content of the component (B5) exceeds the upper limit described above, insulation property of the flux composition is likely to be decreased.

The total content of the component (B) is in a range from 1 mass% to 30 mass%, preferably in a range from 5 mass% to 20 mass%, and particularly preferably in a range from 8 mass% to 18 mass% with respect to 100 mass% of the flux composition. When the total content of the component (B) is less than the lower limit described above, a solder ball is likely to be formed. In contrast, when the total content of the component (B) exceeds the upper limit described above, the insulation property of the flux composition is likely to be decreased.

### Component (C)

As the component (C) in a form of the solvent for use in the exemplary embodiment, a publicly-known solvent may be used as necessary. As such a solvent, a water-soluble solvent having a boiling point of 170 degrees C or more is preferably used.

Examples of such a solvent include diethylene glycol, dipropylene glycol, triethylene glycol, hexylene glycol, hexyl diglycol, 1,5-pentanediol, methyl carbitol, butyl carbitol, 2-ethylhexyl diglycol (EHDG), octanediol, phenyl glycol, diethylene glycol monohexyl ether and tetraethylene glycol dimethyl ether. The solvent can be employed singly or in combination of two or more kinds thereof.

A content of the component (C) is in a range from 20 mass% to 50 mass%, and preferably in a range from 25 mass% to 50 mass% with respect to 100 mass% of the flux composition. When the content of the solvent is in the above-described range, a viscosity of the obtained solder composition can be adjusted to be within an appropriate range.

### Other Components

The flux composition of the exemplary embodiment may further include a thixotropic agent in view of printing performance and the like. Examples of the thixotropic agent to be used include hardened castor oil, amides, kaolin, colloidal silica, organic bentonite and glass frit. The thixotropic agent can be employed singly or in combination of two or more kinds thereof.

When the thixotropic agent is used, a content of the thixotropic agent is preferably in a range from 1 mass% to 15 mass%, more preferably in a range from 2 mass% to 10 mass% with respect to 100 mass% of the flux composition. When the content of the thixotropic agent is less than the lower limit described above, thixotropy cannot be exhibited, and therefore dripping is likely to occur. In contrast, when the content of the thixotropic agent exceeds the upper limit described above, the thixotropy becomes too high, and therefore printing defect is likely to occur.

In addition to the above-described component (A), component (B), component (C) and the thixotropic agent, other additives and other resins may be added as necessary to the flux composition for use in the exemplary embodiment. Examples of the other additives include an antifoaming agent, an antioxidant, a modifier, a delustering agent and a foaming agent. Examples of the other resins include acryl resin.

### Solder Composition

Next, the solder composition of the exemplary embodiment will be described hereinbelow. A solder composition of the exemplary embodiment includes the flux composition of the exemplary embodiment and the component (D) in a form of the solder powder as explained hereinbelow.

A content of the flux composition is in a range from 5 mass% to 35 mass%, preferably in a range from 7 mass% to 15 mass%, and particularly preferably in a range from 8 mass% to 12 mass% with respect to 100 mass% of the solder composition. When a content of the flux composition is less than 5 mass% (i.e., when a content of the solder powder exceeds 95 mass%), the amount of the flux composition as a binder is insufficient, so that it is likely that the flux composition is not easily mixed with the solder powder. In contrast, when the content of the flux composition exceeds 35 mass% (i.e., when the content of the solder powder is less than 65 mass%), it is likely that sufficient solder joint cannot be formed when the resulting solder composition is used.

### (D) Component

Although the (D) solder powder for use in the exemplary embodiment preferably consists of only a lead-free solder powder, the solder powder may be a leaded solder powder. As solder alloy in the solder powder, alloy including stannum (Sn) as its main component is preferably used. Further, examples of a second element of the alloy include silver (Ag), copper (Cu), zinc (Zn), bismuth (Bi), indium(In) and antimony (Sb). Further, as necessary, other elements (i.e., third and subsequent elements) may be added to the alloy. Examples of the other elements include copper, silver, bismuth, indium, antimony, nickel (Ni), cobalt (Co), iron (Fe) and aluminum (Al).

Here, the lead-free solder powder means a powder of solder metal or alloy to which lead is not added. It is to be noted that, lead as an unavoidable impurity may be contained in the lead-free solder powder, however, in this case, an amount of the lead is preferably 100 mass ppm or less.

Specific examples of the lead-free solder powder include Sn-Ag, Sn-Ag-Cu, Sn-Cu, Sn-Ag-Bi, Sn-Bi, Sn-Ag-Cu-Bi, Sn-Sb, Sn-Zn-Bi, Sn-Zn, Sn-Zn-Al, Sn-Ag-Bi-In, Sn-Ag-Cu-Bi-In-Sb and In-Ag. Above all, in view of strength of the solder joint, the solder of Sn-Ag-Cu system is preferably used. A melting point of the solder of Sn-Ag-Cu system is typically in a range from 200 degrees C to 250 degrees C. Incidentally, among the solder of Sn-Ag-Cu system, a melting point of solder of a system whose silver content is low is in a range from 210 degrees C to 250 degrees C.

An average particle diameter of the component (D) is typically in a range from 1 µm to 40 µm, however, in view of the correspondence to an electronic substrate in which a pitch of soldering pads is narrow, the average particle diameter of the component (D) is preferably in a range from 1 µm to 25 µm, more preferably in a range from 2 µm to 20 µm, and particularly preferably in a range from 3 µm to 15 µm. Incidentally, the average particle diameter can be measured with a particle-size measurement device using dynamic light scattering.

The formation and configuration of the solder composition of this exemplary embodiment are not particularly limited.

One example of the solder composition of this exemplary embodiment is a solder composition including a flux composition containing the component (A) in a form of the rosin-based resin, the component (B) in a form of the activator and the component (C) in a form of the solvent, and the component (D) in a form of the solder powder, in which the component (B) in a form of the activator contains (B1) an aromatic carboxylic acid having a hydroxyl group or an acyl group at an ortho position or a pros position, (B2) a polymerized aliphatic acid, (B3) an aliphatic dicarboxylic acid and (B5) a nondissociative activator formed of a nondissociative halogenated compound.

Further, in the example of the solder composition, it is preferable that the component (B1) is at least one of aromatic carboxylic acids selected from the group consisting of 3-hydroxy-2-naphthoic acid, 1-hydroxy-2-naphthoic acid, 2,4-dihydroxybenzoic acid, and 2-(4'-methylbenzoyl) benzoic acid, the component (B2) is at least one of polymerized aliphatic acids selected from the group consisting of dimer acid and trimer acid, the component (B3) is at least one of aliphatic dicarboxylic acids selected from the group consisting of glutaric acid, adipic acid, pimelic acid and suberic acid, the component (B5) is halogenated alcohol, and component (D) is the solder powder of Sn-Ag-Cu system.

### Manufacturing Method of Solder Composition

The solder composition of this exemplary embodiment can be manufactured by blending the flux composition and the component (D) in a form of the solder powder respectively described above at the predetermined ratio described above, and stirring and mixing the blended flux composition and the component (D) in a form of the solder powder.

### Electronic Substrate

Next, the electronic substrate of the exemplary embodiment will be described hereinbelow. A feature of the electronic substrate of the exemplary embodiment is that an electronic component is attached on an electronic substrate (printed circuit board) using the solder composition described above.

Examples of a coating applicator to be used include a screen printer, a metal mask printer, a dispenser and a jet dispenser.

Further, the electronic component can be attached on the electronic substrate by a reflow process in which the electronic component is placed on the solder composition coated by the coating applicator and heated by a reflow furnace under a predetermined condition, so as to attach the electronic component on the printed circuit board.

In the reflow process, the electronic component is placed on the solder composition and heated by the reflow furnace under a predetermined condition. Through the reflow process, a sufficient solder joint can be formed between the electronic component and the printed circuit board. As a result, it is possible to attach the electronic component on the printed circuit board.

The condition for the reflow process may be appropriately set in accordance with the melting point of the solder. For example, when the solder of Sn-Ag-Cu system is used, it is sufficient that the preheating is performed at a temperature in a range from 150 degrees C to 200 degrees C for 60 seconds to 120 seconds and a peak temperature is set to be in a range from 230 degrees C to 270 degrees C.

Further, the solder composition and the electronic substrate of the invention are not limited to the above-described exemplary embodiment, and the invention includes modifications and improvements as long as the modifications and improvements are compatible with the invention.

For example, though the printed circuit board and the electronic component of the electronic substrate are bonded through the reflow process, the bonding process is not limited thereto. For example, instead of the reflow process, a process in which laser beam is used to heat the solder composition (i.e., laser heating process) may be adopted to join the printed circuit board and the electronic component. In this case, a laser beam source is not particularly limited, but any laser beam may be used in accordance with a wavelength corresponding to an absorption band of the metal. Examples of the laser beam source include a solid-state laser (e.g., ruby, glass and YAG), a semiconductor laser (e.g., GaAs and InGaAsP), a liquid laser (e.g., pigment and the like), and a gas laser (e.g., He-Ne, Ar, CO2 and excimer).

### Example

Next, the invention is further described in detail based on examples and comparatives, however the scope of the invention is not limited at all by the examples and comparatives. Incidentally, materials used in the examples and comparatives are as follows.
Component (A)
   rosin-based resin: hydrogenated acid-modified rosin, product name "PINECRYSTAL KE-604", manufactured by Arakawa Chemical Industries, Ltd.
Component (B1)
   Activator A: 3-hydroxy-2-naphthoic acid (see the structural formula (S1) below), manufactured by Tokyo Chemical Industry Co., Ltd.
   Activator B: 1-hydroxy-2-naphthoic acid (see the structural formula (S2) below), manufactured by Tokyo Chemical Industry Co., Ltd.
   Activator C: 2,4-dihydroxybenzoic acid (see the structural formula (S3) below), manufactured by Tokyo Chemical Industry Co., Ltd.
   Activator D: 2-(4'-methylbenzoyl) benzoic acid (see the structural formula (S4) below), manufactured by Tokyo Chemical Industry Co., Ltd.
Component (B2)
   Activator E: dimer acid, product name "UNIDYME14", manufactured by Arizona Chemical Company
Component (B3)
   Activator F: suberic acid, manufactured by Sigma-Aldrich Co. LLC.
   Activator G: glutaric acid, manufactured by INOUE PERFUMERY MFG. CO.,LTD.
Component (B4)
   Activator H: 3-hydroxy-2-methylbenzoic acid (see the structural formula (S5) below), manufactured by Tokyo Chemical Industry Co., Ltd.
   Activator I: 6-hydroxy-2-naphthoic acid (see the structural formula (S6) below), manufactured by Tokyo Chemical Industry Co., Ltd.
Component (B5)
   Activator J: dibromobutenediol
Component (C)
   Solvent A: diethylene glycol monohexyl ether
   Solvent B: diethylene glycol mono-2-ethylhexyl ether
Component (D)
   Solder powder: particle diameter in a range from 10 µm to 30 µm (average particle diameter of 20 µm), solder melting point of 220 degrees C, solder composition of Sn/Ag3.0/Cu0.5 Other Components
   Thixotropic agent: product name "HIMAKOU", manufactured by KF TRADING CO.,LTD. Antioxidant: product name "IRGANOX 245", manufactured by BASF SE.

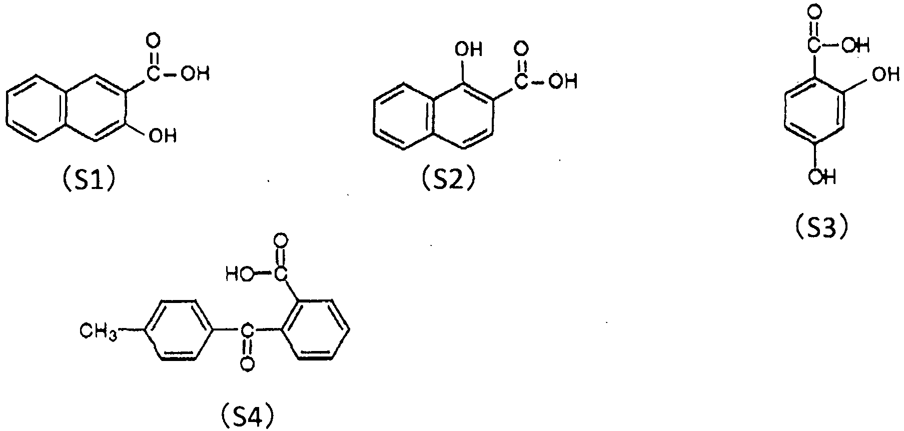

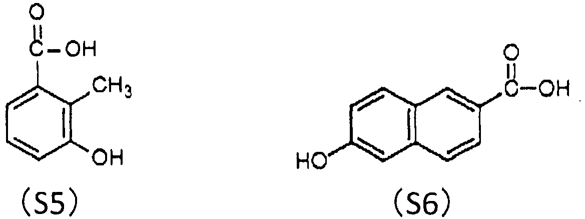

### Example 1

45 parts by mass of rosin-based resin, 21.2 parts by mass of solvent A, 8 parts by mass of solvent B, 9 parts by mass of activator E, 5.5 parts by mass of activator F, 0.5 parts by mass of activator G, 1.3 parts by mass of activator J, 3 parts by mass of activator A, 7.5 parts by mass of thixotropic agent and 2 parts by mass of antioxidant were put into a container, and mixed with use of a planetary mixer to obtain a flux composition.

Thereafter, the obtained 11.9 mass% of flux composition, 0.4 mass% of solvent A and 87.7 mass% of solder powder (100 mass% in total) were put into a container, and mixed with use of a planetary mixer to prepare a solder composition.

### Examples 2 to 5

A solder composition was obtained in the same manner as that in Example 1 except that materials were blended in accordance with composition shown in Table 1.

### Comparatives 1 to 4

A solder composition was obtained in the same manner as that in Example 1 except that materials were blended in accordance with composition shown in Table 1.

### Evaluation of Solder Composition

Evaluation of the solder composition (regarding the small-land melting property, dewetting (albata) and copper plate corrosion) were performed by the following procedures. The obtained results are shown in Table 1.

### (1) Small-land melting property

A solder composition was printed on a substrate having a thickness of 1.6 mm provided with lands of different sizes (land diameter: 0.1 mm to 0.7 mm) with use of masks (thickness: 0.1 mm) having patterns corresponding to the respective lands. Thereafter, the reflow process was performed under the condition that a preheating temperature was in a range from 190 degrees C to 200 degrees C for 80 seconds, a retention time at the temperature of 220 degrees C or more was 30 seconds, and a peak temperature was 245 degrees C, so as to produce a test substrate. The test substrate was observed using a microscope, and a diameter (unit: mmϕ) of a minimum melted land was measured. As the diameter becomes smaller, the melting property becomes more excellent.

### (2) Dewetting (albata)

In compliance with a method described in an appendix 10 of JIS Z 3284-1994, tests regarding the wettability of the solder (dewetting) were conducted. Specifically, a metal plate (albata, size: 30 mm × 30 mm, thickness: 0.3 mm) was prepared, and polished with an abrasive. A solder composition was printed on the metal plate using a metal mask having a thickness of 0.2 mm provided with circular pattern holes each having a diameter of 6.5 mmϕ, so as to obtain a test piece. The test piece was heated on a solder bath set to a temperature of 270 degrees C, and taken out from the solder bath when five seconds elapsed after the solder was melted. The test piece was observed using the microscope, and dewetting (albata) was evaluated in accordance with standards below.
Classification 1: A test plate got wet by the solder melted from the solder composition, and the solder was spread over an area larger than an area on which the solder composition was coated. It is to be note that "CL." in Table 1 denotes "Classification".
Classification 2: The entire area on which the solder composition was coated was in a wetted state with the solder.
Classification 3: A large part of the area on which the solder composition was coated was in a wetted state with the solder (including a dewetting state).
Classification 4: It didn't seem that the test plate got wet by the solder, and the melted solder was in a form of one or two or more solder balls (i.e., non-wetting state).

### (3) Copper plate corrosion

In compliance with a method described in an appendix 4 of JIS Z 3284-1994, tests regarding copper plate corrosion were conducted. Namely, two sheets of copper plates (size: 50 mm × 50 mm, thickness: 0.5 mm) were prepared, and polished with an abrasive and further subjected to ultrasonic cleaning. Then, a lid was prepared by bending one of the copper plates into a U-shape at a position 5 mm away from each end of the copper plate (copper plate A), and a copper plate B was prepared by bending the other one of the copper plates into a U-shape at a position 6 mm away from each end of the copper plate. A solder composition was printed on the metal plate B using a metal mask having a thickness of 0.2 mm provided with circular pattern holes each having a diameter of 6.5 mmϕ. The copper plate B is covered with the lid (i.e., copper plate A) to obtain a test piece. The test piece was placed on a hot plate adjusted to a temperature of 270 degrees C, and retained for five seconds after the solder was melted. The test piece was put into a temperature/humidity-controlled tank set to a temperature of 40 degreed C and a relative humidity of 90% and retained for 96 hours, to obtain a test piece after being subjected to the test. The test piece after being subjected to the test was observed, and corrosion/non-corrosion was determined as follows.
Evaluation method (a): Evaluation was performed based on foreign substances adhered to the lid (copper plate A), the flux residue and borders between the flux residue and the copper plate B (a surface of the residue and crevices in the residue) and occurrence of blue-green discoloration. It is to be noted that initial discoloration occurred at the time of heating the solder was excluded.
Evaluation method (b): Evaluation was performed based on the presence of white or discolored spots separated from each other in the flux residue.

Determination on the corrosion is performed based on whether or not discoloration occurred as described in the evaluation methods (a) and (b) in comparison with an unsoldered test piece.

**Table 1**

| | | | | EX.1 | EX.2 | EX.3 | EX.4 | EX.5 | COMP.1 | COMP.2 | COMP.3 | COMP.4 |
|---|---|---|---|---|---|---|---|---|---|---|---|---|
| | (A) | | rosin-based resin | 45 | 45 | 45 | 45 | 45 | 45 | 45 | 45 | 45 |
| | (C) | | solvent A | 21.2 | 21.2 | 21.2 | 21.2 | 21.2 | 21.2 | 21.2 | 21.2 | 21.2 |
| | | | solvent B | 8 | 8 | 8 | 8 | 8 | 8 | 8 | 8 | 8 |
| | (B) | (B2) | activator E | 9 | 9 | 9 | 9 | 9 | 9 | 9 | 9 | 9 |
| | | (B3) | activator F | 5.5 | 5.5 | 5.5 | 5.5 | 5.5 | 5.5 | 5.5 | 5.5 | 5.5 |
| | | | activator G | 0.5 | 0.5 | 0.5 | 0.5 | 0.5 | 0.5 | 0.5 | 0.5 | 3.5 |
| content of flux composition (parts by mass) | | (B5) | activator J | 1.3 | 1.3 | 1.3 | 1.3 | 1.3 | 1.3 | 1.3 | 1.3 | 1.3 |
| | | (B1) | activator A | 3 | - | - | - | 0.5 | - | - | - | - |
| | | | activator B | - | 3 | - | - | - | - | - | - | - |
| | | | activator C | - | - | 3 | - | - | - | - | - | - |
| | | | activator D | - | - | - | 3 | - | - | - | - | - |
| | | (B4) | activator H | - | - | - | - | - | - | 3 | - | - |
| | | | activator I | - | - | - | - | - | - | - | 3 | - |
| | other components | | thixotropic agent | 7.5 | 7.5 | 7.5 | 7.5 | 7.5 | 7.5 | 7.5 | 7.5 | 7.5 |
| | | | antioxidant | 2 | 2 | 2 | 2 | 2 | 2 | 2 | 2 | 2 |
| | | | flux composition in total | 103 | 103 | 103 | 103 | 100.5 | 100 | 103 | 103 | 103 |
| content of solder composition (mass%) | | | flux composition | 11.9 | 11.9 | 11.9 | 11.9 | 11.9 | 11.9 | 11.9 | 11.9 | 11.9 |
| | | | (C) solvent A | 0.4 | 0.4 | 0.4 | 0.4 | 0.4 | 0.4 | 0.4 | 0.4 | 0.4 |
| | | | (D) solder powder | 87.7 | 87.7 | 87.7 | 87.7 | 87.7 | 87.7 | 87.7 | 87.7 | 87.7 |
| | | | solder composition in total | 100 | 100 | 100 | 100 | 100 | 100 | 100 | 100 | 100 |
| evaluation result | (1) small-land melting property (mm *φ*) | | | 0.20 | 0.26 | 0.26 | 0.26 | 0.24 | 0.30 | 0.30 | 0.30 | 0.30 |
| | (2) dewetting (albata) | | | CL.3 | CL.3 | CL.3 | CL.3 | CL.3 | CL.3 | CL.4 | CL.3 | CL.3 |
| | (3) copper plate corrosion | | | uncorroded | uncorroded | uncorroded | uncorroded | uncorroded | uncorroded | corroded | uncorroded | uncorroded |

As is clear from the results shown in Table 1, it was confirmed that all the evaluation items including the small-land melting property, dewetting (albata) and copper foil corrosion are rated excellent when the solder composition of the exemplary embodiment that contains the component (B1) is used (i.e., Examples 1 to 5). Accordingly, it was confirmed that the solder composition of the exemplary embodiment is excellent in the melting property in a small area and in the solderability for the albata.

On the other hand, it was confirmed that the small-land melting property is insufficient, and each of the dewetting (albata) and the copper foil corrosion is also at an insufficient level in some cases when the solder composition that does not contain the component (B1) is used (i.e., Comparatives 1 to 4).

## Claims

1. A solder composition comprising:
5 mass% to 35 mass% of a flux composition; and
65 mass% to 95 mass% of a component (D) in a form of a solder powder,
the flux composition comprising, based on the total mass of the flux composition:
30 mass% to 70 mass% of a component (A) in a form of a rosin-based resin;
1 mass% to 30 mass% of a component (B) in a form of an activator; and
20 mass% to 50 mass% of a component (C) in a form of a solvent;
wherein
the component (B) in a form of the activator comprises, based on the total mass of the flux composition:
0.1 mass% to 10 mass% of a component (B1) in a form of an aromatic carboxylic acid having a hydroxyl group or an acyl group at an ortho position or a pros position;
0.1 mass% to 12 mass% of a component (B2) in a form of a polymerized aliphatic acid;
0.1 to 10 mass% of a component (B3) in a form of an aliphatic dicarboxylic acid, and
0.1 to 10 mass% of a component (B5) in a form of a nondissociative activator formed of a nondissociative halogenated compound, and
the component (B1) is at least one of aromatic carboxylic acids selected from the group consisting of 2-hydroxybenzoic acid, 2-hydroxy-6-methylbenzoic acid, 2,4-dihydroxybenzoic acid, 2,4-dihydroxy-6-methylbenzoic acid, 1-hydroxy-2-naphthoic acid, 3-hydroxy-2-naphthoic acid, 1,4-dihydroxy-2-naphthoic acid, 2-benzoyl benzoic acid, 2-(4'-methylbenzoyl) benzoic acid, 2-acetyl benzoic acid, 1-benzoyl-2-naphthoic acid and 3-benzoyl-2-naphthoic acid.

2. The solder composition according to claim 1, wherein
the component (B1) is at least one of aromatic carboxylic acids selected from the group consisting of 3-hydroxy-2-naphthoic acid, 1-hydroxy-2-naphthoic acid, 2,4-dihydroxybenzoic acid and 2-(4'-methylbenzoyl) benzoic acid.

3. The solder composition according to claim 1, wherein
the component (B1) is 3-hydroxy-2-naphthoic acid.

4. The solder composition according to any one of claims 1 to 3, wherein
the component (B2) is at least one of polymerized aliphatic acids selected from the group consisting of dimer acid and trimer acid.

5. The solder composition according to any one of claims 1 to 4, wherein
the component (B3) is an aliphatic dicarboxylic acid having a carbon number in a range from 5 to 20.

6. The solder composition according to any one of claims 1 to 5, wherein
the component (D) is a solder powder of Sn-Ag-Cu system.

7. Use of the solder composition according to any one of claims 1 to 6 for joining the composition to at least one target, wherein the at least one target to which the solder composition is joined is albata.

8. An electronic substrate comprising an electronic component attached thereon using the solder composition according to any one of claims 1 to 6.

## Patentansprüche

1. Weichlotzusammensetzung, umfassend:
5 Massen% bis 35 Massen% einer Flussmittelzusammensetzung und
65 Massen% bis 95 Massen% eines Bestandteils (D) in Form eines Weichlotpulvers,
wobei die Flussmittelzusammensetzung, basierend auf der Gesamtmasse der Flussmittelzusammensetzung, umfasst:
30 Massen% bis 70 Massen% eines Bestandteils (A) in Form eines Harzes auf Kolophonium-Basis;
1 Massen% bis 30 Massen% eines Bestandteils (B) in Form eines Aktivators; und
20 Massen% bis 50 Massen% eines Bestandteils (C) in Form eines Lösungsmittels;
wobei
der Bestandteil (B) in Form des Aktivators, basierend auf der Gesamtmasse der Flussmittelzusammensetzung, umfasst:
0,1 Massen% bis 10 Massen% eines Bestandteils (B1) in Form einer aromatischen Carbonsäure mit einer Hydroxylgruppe oder einer Acylgruppe an einer ortho-Position oder einer pros-Position;
0,1 Massen% bis 12 Massen% eines Bestandteils (B2) in Form einer polymerisierten aliphatischen Säure;
0,1 bis 10 Massen% eines Bestandteils (B3) in Form einer aliphatischen Dicarbonsäure und
0,1 bis 10 Massen% eines Bestandteils (B5) in Form eines nichtdissoziativen Aktivators, gebildet aus einer nichtdissoziativen halogenierten Verbindung, und
der Bestandteil (B1) mindestens einer ist aus aromatischen Carbonsäuren, ausgewählt aus der Gruppe, bestehend aus 2-Hydroxybenzoesäure, 2-Hydroxy-6-methylbenzoesäure, 2,4-Dihydroxybenzoesäure, 2,4-Dihydroxy-6-methylbenzoesäure, 1-Hydroxy-2-naphthoesäure, 3-Hydroxy-2-naphthoesäure, 1,4-Dihyhdroxy-2-naphthoesäure, 2-Benzoylbenzoesäure, 2-(4'-Methylbenzoyl)benzoesäure, 2-Acetylbenzoesäure, 1-Benzoyl-2-naphthoesäure und 3-Benzoyl-2-naphthoesäure.

2. Weichlotzusammensetzung gemäß Anspruch 1, wobei
der Bestandteil (B1) mindestens einer ist aus aromatischen Carbonsäuren, ausgewählt aus der Gruppe, bestehend aus 3-Hydroxy-2-naphthoesäure, 1-Hydroxy-2-naphthoesäure, 2,4-Dihydroxybenzoesäure und 2-(4'-Methylbenzoyl)benzoesäure.

3. Weichlotzusammensetzung gemäß Anspruch 1, wobei
der Bestandteil (B1) 3-Hydroxy-2-naphthoesäure ist.

4. Weichlotzusammensetzung gemäß einem der Ansprüche 1 bis 3, wobei
der Bestandteil (B2) mindestens einer ist aus polymerisierten aliphatischen Säuren, ausgewählt aus der Gruppe, bestehend aus Dimersäuren und Trimersäuren.

5. Weichlotzusammensetzung gemäß einem der Ansprüche 1 bis 4, wobei
der Bestandteil (B3) eine aliphatische Dicarbonsäure mit einer Kohlenstoffanzahl in einem Bereich von 5 bis 20 ist.

6. Weichlotzusammensetzung gemäß einem der Ansprüche 1 bis 5, wobei
der Bestandteil (D) ein Weichlotpulver des Sn-Ag-Cu-Systems ist.

7. Verwendung der Weichlotzusammensetzung gemäß einem der Ansprüche 1 bis 6 zum Verbinden der Zusammensetzung mit mindestens einem Ziel, wobei das mindestens eine Ziel, mit welchem die Zusammensetzung verbunden ist, Neusilber ist.

8. Elektronisches Substrat, umfassend einen elektronischen Bauteil, befestigt darauf unter Verwendung der Weichlotzusammensetzung gemäß einem der Ansprüche 1 bis 6.

## Revendications

1. Composition de brasage comprenant:
5% en masse à 35% en masse d'une composition de flux; et
65% en masse à 95% en masse d'un composant (D) sous forme d'une poudre de brasage, la composition de flux comprenant, par rapport à la masse totale de la composition de flux:
30% en masse à 70% en masse d'un composant (A) sous forme de résine à base de colophane;
1% en masse à 30% en masse d'un composant (B) sous forme d'activateur; et
20% en masse à 50% en masse d'un composant (C) sous forme de solvant;
dans laquelle
le composant (B) sous forme d'activateur comprend, sur la base de la masse totale de la composition de flux:
0,1% en masse à 10% en masse d'un composant (B1) sous forme d'acide carboxylique aromatique présentant un groupe hydroxyle ou un groupe acyle en position ortho ou en position pros;
0,1% en masse à 12% en masse d'un composant (B2) sous forme d'acide aliphatique polymérisé;
0,1 à 10% en masse d'un composant (B3) sous forme d'acide dicarboxylique aliphatique, et
0,1 à 10% en masse d'un composant (B5) sous forme d'activateur non dissociatif formé d'un composé halogéné non dissociatif, et
le composant (B1) est au moins l'un des acides carboxyiiques aromatiques choisis dans le groupe consistant en acide 2-hydroxybenzoïque, acide 2-hydroxy-6-méthylbenzoïque, acide 2,4-dihydroxybenzoïque, acide 2,4-dihydroxy-6-méthyl-benzoïque, acide 1-hydroxy-2-naphtoïque, acide -hydroxy-2-naphtoïque, acide 1,4-dihydroxy-2-naphtoïque, acide 2-benzoyle benzoïque, acide 2-(4'-méthylbenzoyle) benzoïque, acide 2-acétylbenzoïque, acide 1-benzoyl-2-naphtoïque et acide 3-benzoyl-2-naphtoïque.

2. Composition de brasage selon la revendication 1, dans laquelle
le composant (B1) est au moins l'un des acides carboxyliques aromatiques choisis dans le groupe consistant en acide 3-hydroxy-2-naphtoïque, acide 1-hydroxy-2-naphtoïque, acide 2,4-dihydroxybenzoïque et acide 2-(4'-méthyl-benzoyle) benzoïque.

3. Composition de brasage selon la revendication 1, dans laquelle le composant (B1) est l'acide 3-hydroxy-2-naphtoïque.

4. Composition de brasage selon l'une quelconque des revendications 1 à 3, dans laquelle
le composant (B2) est au moins l'un des acides aliphatiques polymérisés choisis dans le groupe consistant en acide dimère et en acide trimère.

5. Composition de brasage selon l'une quelconque des revendications 1 à 4, dans laquelle
le composant (B3) est un acide dicarboxylique aliphatique ayant un nombre de carbone compris entre 5 et 20.

6. Composition de brasage selon l'une quelconque des revendications 1 à 5, dans laquelle
le composant (D) est une poudre de brasage de système Sn-Ag-Cu.

7. Utilisation de la composition de brasage selon l'une quelconque des revendications 1 à 6 pour joindre la composition à au moins une cible, dans laquelle ladite au moins une cible à laquelle la composition de brasage est jointe est l'albata.

8. Substrat électronique comprenant un composant électronique fixé sur celui-ci en utilisant la composition de brasage selon l'une quelconque des revendications 1 à 6.
